# FASCICULE DE BREVET EUROPEEN

(11) **EP 3 217 010 B1**
(45) Date de publication et mention de la délivrance du brevet: **27.03.2024**
(21) Numéro de dépôt: 17157856.0
(22) Date de dépôt: 24.02.2017
(51) Int. Cl.: F02P 19/02, F02N 19/10, B60L 1/02, F01P 11/20, B60H 1/22, B60H 1/00, B60H 1/03, F02D 41/06

(54) **PROCÉDÉ DE COMMANDE DES BOUGIES DE PRÉCHAUFFAGE D'UN MOTEUR**
STEUERUNGSVERFAHREN DER VORGLÜHKERZEN EINES MOTORS
METHOD FOR CONTROLLING THE PREHEATING PLUGS OF AN ENGINE

(30) Priorité: 08.03.2016 FR 1651903
(43) Date de publication de la demande: 13.09.2017
(73) Titulaire: Stellantis Auto SAS, 78300 Poissy (FR)
(72) Inventeur: PIRAS, PIERRE XAVIER, 78700 CONFLANS STE HONORINE (FR)

(56) Documents cités:
- EP-A2- 1 279 829
- DE-B3-102008 015 283
- FR-A1- 2 996 168
- US-A- 5 781 877
- US-A1- 2004 044 462
- US-A1- 2007 084 427
- US-A1- 2013 035 840

## Description

L'invention se rapporte généralement au domaine des moteurs thermiques, en particulier des moteurs de type Diesel.

Plus précisément, l'invention se rapporte à un dispositif et à un procédé permettant le pilotage du démarrage d'un moteur thermique Diesel, le circuit de refroidissement de ce moteur étant relié à un système de chauffage auxiliaire.

Le démarrage d'un moteur thermique est une succession d'évènements qui commence par l'activation du démarreur, jusqu'à l'obtention d'un régime stabilisé. Le moteur Diesel est un moteur dit à auto-allumage par compression. L'air extérieur aspiré lors de l'admission doit être suffisamment chaud (entre 700°C et 900°C) pour s'enflammer spontanément (phénomène d'auto-allumage), à la fin de la phase de compression dans la chambre de combustion, et ainsi démarrer le cycle de fonctionnement. Par conséquent, la thermique des pièces de la chambre de combustion est un facteur capital pour permettre la bonne réalisation du démarrage.

Or, lorsque la température extérieure est basse, notamment négative, la thermique des pièces de la chambre de combustion ne permet pas d'atteindre la température requise pour obtenir l'auto-allumage. Le moteur, mis en action dans ces conditions, fonctionne mal, voire ne démarre pas du tout.

Afin de pallier ces inconvénients, des bougies de préchauffage sont adjointes. Ces dispositifs de type résistifs, lorsqu'ils sont soumis à de forts courants, dissipent de la chaleur par effet Joule et permettent de mettre à température la chambre de combustion. Cette opération est appelée préchauffage.

La commande de ces bougies de préchauffage est indexée sur la température du liquide de refroidissement, laquelle est mesurée grâce à un capteur.

Si la température mesurée du liquide de refroidissement est trop basse, c'est-à-dire inférieure à une température prédéfinie correspondant au seuil d'activation des bougies de préchauffage, le calculateur moteur va envoyer un signal d'activation de la commande du préchauffage. Les bougies sont alors mises en action et chauffent la chambre de combustion du moteur. Lorsque la température maximale d'activation est dépassée, le calculateur moteur ne délivre plus le signal de commande des bougies de préchauffage, et le moteur est considéré comme suffisamment chaud et donc apte à pouvoir être démarré.

D'autre part, les véhicules sont généralement munis, dans les pays froids, d'un dispositif de chauffage dit auxiliaire. Ce type d'appareil est destiné à chauffer l'habitacle, avant l'entrée de l'utilisateur. De cette manière, l'utilisateur voit son confort et ses conditions de sécurité améliorés, la chaleur générée par le dispositif de chauffage auxiliaire permettant de faciliter le dégivrage des vitres et du pare-brise.

Ce dispositif de chauffage auxiliaire, connecté au circuit de refroidissement, est par exemple constitué d'une chaudière autonome comportant un élément chauffant, et d'une pompe intégrée. L'activation du dispositif de chauffage auxiliaire s'effectue préalablement à l'entrée de l'utilisateur dans l'habitacle, et par conséquent avant le démarrage du véhicule. Cette activation est déclenchée par le calculateur de l'habitacle, luimême paramétré par l'utilisateur, qui peut ainsi choisir, par exemple, l'heure de mise en route ou la température extérieure minimale d'activation.

La mise en route du dispositif de chauffage auxiliaire entraîne une chauffe du liquide de refroidissement. Le liquide chauffé est mis en circulation par la pompe, au sein du circuit de refroidissement. La chaleur est ensuite diffusée dans l'habitacle, grâce à l'aérotherme. Les calories se concentrent, dans un premier temps, autour du dispositif de chauffage, puis se propagent dans un second temps au sein de l'habitacle, et dans le restant du moteur, dont les pièces de la chambre de combustion.

Les organes de propulsion du moteur subissent donc une chauffe retardée par rapport à celle du liquide de refroidissement.

Ainsi, il existe des plages de temps d'activation du dispositif de chauffage auxiliaire pour lesquelles des éléments du bloc moteur, comme l'huile du carter moteur ou les parois de la chambre de combustion, peuvent être à basse température, alors que le circuit de refroidissement est chaud.

Ces disparités de température ne sont pas sans créer des problèmes, lors du démarrage à froid d'un moteur Diesel.

En effet, si la température du liquide de refroidissement s'élève au-delà de la température maximale d'activation des bougies de préchauffage, le calculateur moteur, considérant que le moteur est déjà chaud, ne commande pas l'activation de la chauffe des bougies de préchauffage. Si, dans le même temps, la chambre de combustion n'a pas atteint la température permettant un échauffement suffisant de l'air pour obtenir l'autoallumage du carburant lors de la phase de compression, le démarrage du moteur est impossible.

Le document FR2996168 mentionne l'hétérogénéité du chauffage du moteur à l'activation d'un dispositif de chauffage additionnel, générant des démarrages difficiles. Le document FR2996168 propose de recalculer la température de référence sur laquelle se base la commande des bougies de préchauffage. Cette température (dite de substitution) est déterminée par pondération entre la température mesurée du liquide de refroidissement et la température d'huile du moteur. Le coefficient de cette pondération évolue, en fonction de l'état d'activation et de désactivation du dispositif de chauffage auxiliaire.

Cette méthode de l'art antérieur s'applique généralement pour le pilotage global du moteur, mais pas particulièrement pour la phase de démarrage, et cette méthode de l'art antérieur ne prend pas en compte les spécificités liées à la commande des bougies de préchauffage, indispensables pour assurer un démarrage, notamment dans des conditions de froid intense.

Par ailleurs, cette méthode de l'art antérieur implique de mesurer la température d'huile moteur. Or, la détermination de ce paramètre impose la mise en place d'un capteur additionnel d'huile moteur, lequel est coûteux et en général non installé de manière standard sur les véhicules actuellement fabriqués en grande série. Il est certes possible d'utiliser des cartographies existantes, mais celles-ci donnent des estimations de température d'huile qui ne prennent pas en considération l'influence de l'utilisation d'un dispositif de chauffage auxiliaire.

On connait encore le document US2007084427A1 correspondant au préambule de la revendication 1.

Un premier objectif est de proposer un procédé et un dispositif de commande de chauffe d'au moins une bougie de préchauffage, en vue d'améliorer le démarrage à froid d'un moteur Diesel dont le circuit de refroidissement est relié à un dispositif de chauffage auxiliaire.

Un deuxième objectif est de proposer un procédé et un dispositif de commande de chauffe d'au moins une bougie de préchauffage, dont les variables d'ajustement sont la température du liquide de refroidissement et la durée d'activation du dispositif de chauffage auxiliaire.

Un troisième objectif est de proposer un procédé et un dispositif de commande de chauffe d'au moins une bougie de préchauffage, permettant d'optimiser le chauffage d'au moins une bougie de préchauffage, de manière à prolonger sa durée de vie.

Un quatrième objectif est de proposer un procédé et un dispositif de commande de chauffe d'au moins une bougie de préchauffage, permettant de tenir compte de l'état de charge de la batterie, de manière à favoriser un démarrage pour le cas où la batterie présente une décharge.

Un cinquième objectif est de proposer un véhicule équipé d'un moteur Diesel, le circuit de refroidissement de ce moteur étant relié à un dispositif de chauffage auxiliaire, l'activation de la chauffe d'au moins une bougie de préchauffage étant commandée par un calculateur répondant aux quatre premiers objectifs ci-dessus.

A cet effet, il est proposé, selon un premier aspect, un procédé de commande de la chauffe d'au moins une bougie de préchauffage dans un moteur, notamment de type Diesel, muni d'un circuit de refroidissement dans lequel circule un liquide de refroidissement, le circuit de refroidissement étant connecté à un dispositif de chauffage auxiliaire comportant une chaudière, la chaudière permettant de chauffer le liquide de refroidissement du moteur par un élément chauffant, le dispositif de chauffage auxiliaire étant destiné à être activé avant le démarrage du moteur, le procédé de commande de la chauffe de la bougie de préchauffage comprenant les étapes suivantes :
- réception d'une action de mise en contact d'allumage, correspondant à un ordre de démarrage du moteur par l'utilisateur ;
- relevé de la durée durant laquelle le dispositif de chauffage auxiliaire a été activé, la durée d'activation du chauffage auxiliaire étant mesurée entre le moment où le chauffage auxiliaire est mis en route et le moment où il est mis à l'arrêt ;
- comparaison de la durée d'activation du dispositif de chauffage auxiliaire à une durée prédéterminée de seuil haut ;
- si la durée d'activation du dispositif de chauffage auxiliaire est strictement inférieure à la durée prédéterminée de seuil haut, alors commande de la chauffe de la bougie de préchauffage.
- si la durée d'activation du dispositif de chauffage auxiliaire est supérieure à la durée prédéterminée de seuil haut, alors démarrage du moteur.

Il est proposé, selon un deuxième aspect, un dispositif pour la commande de chauffe d'au moins une bougie de préchauffage dans un moteur Diesel muni d'un circuit de refroidissement dans lequel circule un liquide de refroidissement, un dispositif de chauffage auxiliaire comportant une chaudière étant connecté au circuit de refroidissement, la chaudière permettant de chauffer le liquide de refroidissement du moteur par un élément chauffant, le dispositif de chauffage auxiliaire étant destiné à être activé avant le démarrage du moteur, le dispositif mettant en oeuvre le procédé tel que présenté ci-dessus.

Il est proposé, selon un troisième aspect, un véhicule, notamment un véhicule automobile comprenant un dispositif tel que présenté ci-dessus.

D'autres objets et avantages de l'invention apparaîtront à la lecture de la description suivante de modes de réalisation donnés à titre d'exemples illustratifs et non limitatifs, en référence aux dessins annexés dans lesquels :
- la figure 1 représente de manière simplifiée un véhicule à moteur Diesel, ce véhicule étant pourvu d'un dispositif de chauffage auxiliaire ;
- la figure 2 illustre schématiquement un dispositif de commande d'au moins une bougie de préchauffage, en fonction de la température du liquide de refroidissement et di temps de déclenchement d'un dispositif de chauffage auxiliaire ;
- la figure 3 illustre schématiquement un dispositif de commande de la chauffe d'au moins une bougie de préchauffage, en fonction de la température du liquide de refroidissement, du temps de déclenchement d'un dispositif de chauffage auxiliaire, de la température d'huile, et de l'état de charge de la batterie ;
- la figure 4 décrit de manière synoptique le fonctionnement du dispositif représenté en figure 2 ;
- la figure 5 décrit de manière synoptique le fonctionnement du dispositif représenté en figure 3.

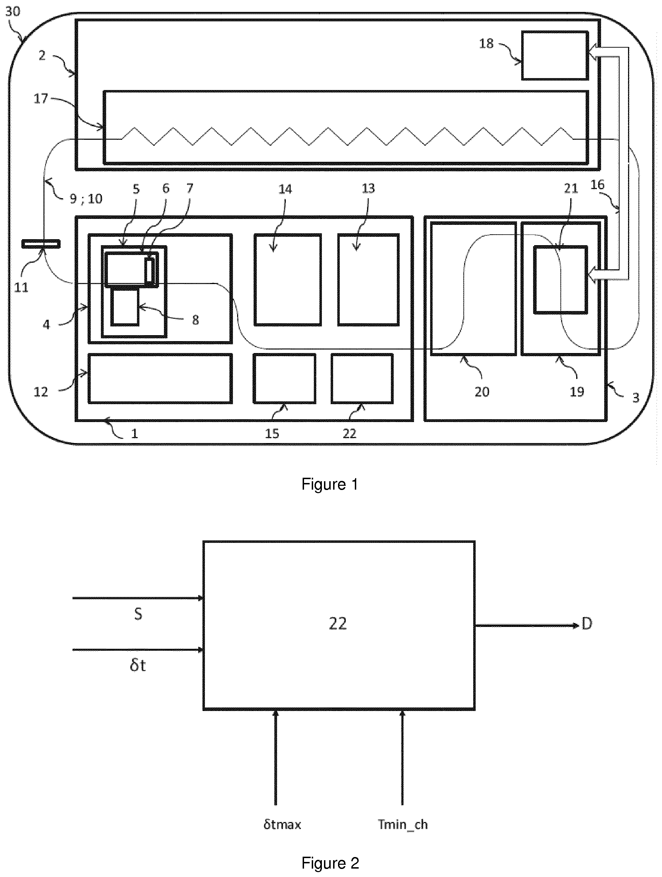

Sur la figure 1 est représenté de façon schématique et simplifiée un véhicule automobile **30** comprenant un moteur thermique à auto-allumage **1** (également appelé moteur Diesel), un habitacle **2** et un dispositif de chauffage auxiliaire **3**.

Le moteur est muni d'un carter moteur **4** qui comprend au moins un cylindre **5** contenant une chambre de combustion **6**, laquelle comporte une bougie de préchauffage **7**.

Il est nécessaire pour un démarrage correct que la chambre de combustion **6** soit à une température **Tmin_ch** minimale, à partir de laquelle un auto-allumage peut avoir lieu quand un mélange air-gasoil est comprimé par le piston **8**.

Au cas où cette température **Tmin_ch** minimale n'est pas atteinte, un apport calorifique est assuré par la chauffe d'au moins une bougie de préchauffage **7**, permettant de réaliser un préchauffage de la chambre de combustion **6**.

Par ailleurs, le moteur **1** comporte un circuit de refroidissement **9**, dans lequel circule un liquide de refroidissement **10**, comprenant par exemple un mélange d'eau et d'additifs qui permettent notamment d'augmenter sa résistance au gel. Le liquide de refroidissement **10** peut ainsi, par exemple, évoluer dans une plage de température de -40°C à 100°C. La température du liquide de refroidissement **Tliq** est mesurée au moyen, par exemple, d'une sonde de température **11**.

Sous le carter moteur **4**, un carter d'huile **12** permet, entre autres, la lubrification des éléments du carter moteur **4**.

Le moteur **1** comporte également une batterie **13** permettant notamment de stocker l'énergie électrique, et d'alimenter le démarreur **14**.

Le moteur **1** et ses organes sont pilotés par un calculateur moteur **15**, qui commande notamment la chauffe d'au moins une bougie de préchauffage **7**. Ce calculateur moteur **15** communique avec les autres calculateurs du véhicule **30** au travers de dispositifs de communication spécifiques, comme un bus de communication **16**.

Un aérotherme **17**, permet, par échange de chaleur, la diffusion de calories du liquide de refroidissement **10** dans l'habitacle **2**.

La commande électronique de l'aérotherme **17** et du dispositif de chauffage auxiliaire **3** peut s'effectuer grâce à un calculateur habitacle **18**.

Le dispositif de chauffage auxiliaire **3** comprend une chaudière **19** et une pompe **20** à liquide de refroidissement **10**. Connectée au circuit de refroidissement **9** du moteur **1**, la chaudière **19** chauffe le liquide de refroidissement **10** par l'intermédiaire d'un élément chauffant **21**. Le liquide de refroidissement **10** chauffé est ensuite mis en circulation dans le circuit de refroidissement **9** par l'intermédiaire de la pompe **20** à liquide de refroidissement **10**, intégrée dans le dispositif de chauffage auxiliaire **3**.

La programmation du dispositif de chauffage auxiliaire **3** est effectuée par l'utilisateur, qui introduit des paramètres tels que le temps de chauffe ou la température d'habitacle **2** souhaitée.

Le dispositif de chauffage auxiliaire **3** est destiné à être activé par le calculateur habitacle **18** afin de mettre en oeuvre le paramétrage de l'utilisateur.

La durée **δt** d'activation du dispositif de chauffage auxiliaire **3** désigne, la durée de fonctionnement du dispositif de chauffage auxiliaire **3**, entre le moment où il est mis en route et le moment où il est mis à l'arrêt, lors de la mise en contact allumage **S** ou par le calculateur habitacle **18**.

La mise en contact d'allumage **S** correspond à un ordre de démarrage du moteur **1** par l'utilisateur. La mise en contact allumage **S** est effectuée par l'utilisateur quand, par exemple, il tourne avec une clé de contact un commutateur de démarrage, ou par pression sur un bouton poussoir situé dans l'habitacle **2**. Lorsqu'une mise en contact **S** est effectuée par l'utilisateur, le calculateur moteur **15** reçoit une action de mise en contact allumage **S**.

La commande de chauffe d'au moins une bougie de préchauffage **7** est mise en oeuvre dans un dispositif **22** de commande de chauffe d'au moins une bougie de préchauffage **7**, comme illustré sur les figures 2 à 5, en particulier pour une durée **δt** d'activation d'un dispositif de chauffage auxiliaire **3**.

Lors du fonctionnement du dispositif de chauffage auxiliaire **3**, l'élément chauffant de la chaudière **19** chauffe le liquide de refroidissement **10**. La température du liquide de refroidissement **10** s'élève plus rapidement que celle du carter moteur **4** et de la chambre de combustion **6**.

Avantageusement, deux valeurs de temps **δtmin** et **δtmax** sont prédéfinies. Ces valeurs dites de seuils permettent de préciser une plage de temps pendant laquelle la commande de chauffe d'au moins une bougie de préchauffage **7** est activée.

Avantageusement, il est déterminé une température **Tliqref** maximale du liquide de refroidissement **10** d'activation d'au moins une bougie **7**, au-dessous de laquelle, indépendamment de l'adjonction d'un dispositif de chauffage **3**, la chauffe d'au moins une bougie de préchauffage **7** a lieu.

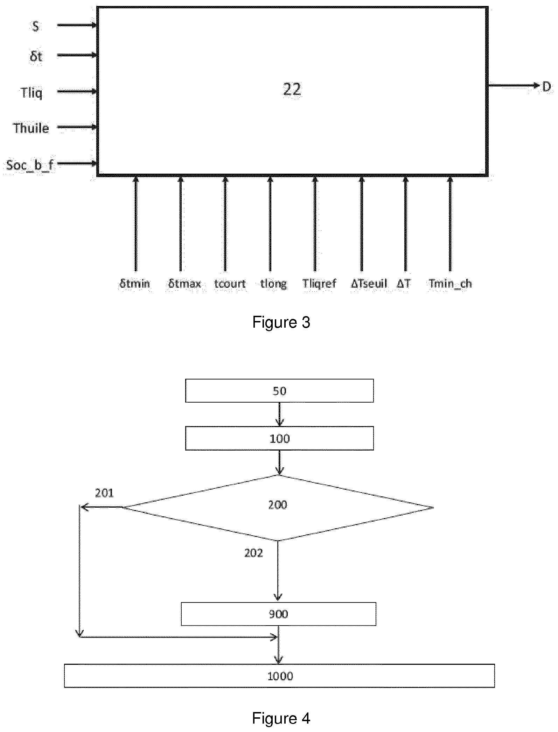

Suivant un premier mode de réalisation, schématisé par la figure 2 et détaillé figure 4, suite à la réception **50** d'une action de mise en contact d'allumage **S** correspondante à un ordre de démarrage du moteur **1** par l'utilisateur, la durée **δt** d'activation du dispositif de chauffage auxiliaire **3** est relevée (étape **100**), au moyen par exemple du calculateur habitacle **18**.

La durée **δt** d'activation du dispositif de chauffage auxiliaire **3** relevée est ensuite comparée (étape **200**) à la durée **δtmax** de seuil haut.

Si la durée **δt** d'activation est strictement supérieure à la durée **δtmax** prédéterminée de seuil haut (flèche **201**), il est possible de procéder directement au démarrage **D** (étape **1000**).

Si la durée **δt** d'activation du dispositif de chauffage auxiliaire **3** est strictement inférieure (flèche **202**) à la durée **δtmax** prédéterminée de seuil, alors il faut commander (étape **900**) la chauffe d'au moins une bougie de préchauffage **7**.

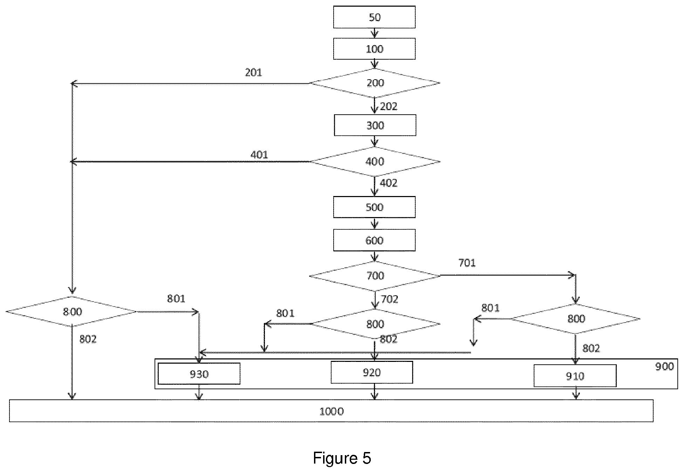

Suivant un second mode de réalisation n'appartenant pas à l'invention, schématisé par la figure 3 et détaillé figure 5, si la durée **δt** d'activation du dispositif de chauffage auxiliaire **3** est strictement inférieure (flèche **202**) à la durée **δtmax** prédéterminée de seuil, on peut prévoir de relever alors la température **Tliq** du liquide de refroidissement **10** (étape **300**) et la comparer (étape **400**) à la température **Tliqref** maximale du liquide de refroidissement d'activation d'au moins une bougie de préchauffage **7**. Dans ce cas, simultanément, la durée **δt** d'activation est comparée (étape **400**) à la valeur de seuil bas **δtmin**.

Si la durée d'activation **δt** du dispositif de chauffage auxiliaire **3** est strictement inférieure à la durée **δtmin** prédéterminée de seuil bas ou si la température **Tliq** du liquide de refroidissement **10** est strictement inférieure à la température **Tliqref** maximale du liquide de refroidissement **10** d'activation d'au moins une bougie de préchauffage **7** (flèche **402**), alors la commande de chauffe d'au moins une bougie de préchauffage **7** est activée (étape **900**), avant de procéder au démarrage du moteur (étape **1000).**

Si la température **Tliq** du liquide de refroidissement **10** est supérieure ou égale à la température **Tliqref** maximale du liquide de refroidissement **10** (flèche **401**), alors il est possible de procéder directement au démarrage **D** (étape **1000**).

Pour une durée **δt** d'activation du dispositif de chauffage auxiliaire **3** comprise entre le temps **δtmin** de seuil bas et le temps **δtmax** de seuil haut, il n'est pas certain que la température de la chambre de combustion **6** soit supérieure à la température **Tmin_ch** minimale de la chambre de combustion **6**. Du fait de cette incertitude quant à l'état thermique du moteur **1**, une commande de la chauffe d'au moins une bougie de préchauffage **7** est effectuée (étape **900**), puis le moteur **1** est démarré (étape **1000).**

Les valeurs des durées **δtmin** de seuil bas et **δtmax** de seuil haut sont des valeurs ajustables ou calibrables. Elles peuvent être définies en effectuant des essais de fonctionnement sur un véhicule prototype, muni d'un dispositif de chauffage auxiliaire **3**, et soumis à différentes conditions de fonctionnement. Plusieurs valeurs de temps de chauffe du dispositif de chauffage auxiliaire **3** sont balayées, permettant ainsi de définir des valeurs pour lesquels une commande de l'activation d'au moins une bougie de préchauffage **7** est nécessaire.

La durée **δtmin** de seuil bas est, de préférence, définie comme le temps maximal d'activation du dispositif de chauffage auxiliaire **3** pour lequel la température **Tliq** de liquide de refroidissement **10** est strictement inférieure à la température **Tliqref** maximale du liquide de refroidissement de commande de la chauffe d'au moins une bougie de préchauffage **7**. Dans cette configuration, la durée **δt** d'activation du dispositif de chauffage auxiliaire **3** est trop courte pour chauffer suffisamment longtemps le liquide de refroidissement **10** de manière à ce que la chambre de combustion **6** atteigne la température **Tmin_ch** minimale. Pour toute durée **δt** d'activation du dispositif de chauffage auxiliaire **3** strictement inférieure à **δtmin,** il est nécessaire de procéder à la chauffe d'au moins une bougie de préchauffage **7**.

La durée **δtmax** de seuil haut est préférentiellement définie afin qu'une activation du dispositif de chauffage auxiliaire **3** pendant cette durée **δtmax** permette d'obtenir à la fois une température **Tliq** du liquide de refroidissement **10** supérieure à la température **Tliqref** maximale du liquide de refroidissement **10** d'activation d'au moins une bougie de préchauffage **7**, et une température du carter moteur **4** au-dessus de la température **Tmin_ch** minimale. Pour une durée **δt** d'activation du dispositif de chauffage auxiliaire **3** strictement supérieure à la durée **δtmax** de seuil haut, il est constaté une homogénéité de température au sein de l'ensemble du moteur **1**. Il est constaté que la température de la chambre de combustion **6** est alors supérieure à la température **Tmin_ch** minimale nécessaire à un démarrage **D** du moteur **1** sans préchauffage.

Avantageusement, il est possible de sélectionner parmi des temps **tcourt** et **tlong** de chauffe prédéterminés de bougies de préchauffage **7,** un temps de chauffe d'au moins une bougie de préchauffage **7** en fonction de l'état thermique du moteur **1**.

Le chauffage du liquide de refroidissement **10** par le dispositif de chauffage auxiliaire **3** ayant un impact thermique similaire sur l'huile et les parois du carter moteur **4,** l'état thermique du moteur **1** peut être connu en effectuant un relevé de la température **Th** d'huile grâce à un capteur ou d'une sonde spécifique (étape **500**).

Un calculateur moteur **15** permet ensuite de déterminer l'écart **ΔT** entre la température d'huile **Th** et la température **Tliq** du liquide de refroidissement **10** de la manière suivante : **ΔT** = **Th** - **Tliq** (étape **600**).

Cet écart **ΔT** de température est comparé à une valeur seuil **ΔTseuil** (étape **700**).

Si l'écart **ΔT** de température **Th** d'huile par rapport à la température **Tliq** du liquide de refroidissement **10** est strictement supérieur à la valeur seuil **ΔTseuil** (lien **702**), alors au moins une bougie de préchauffage **7** doit être chauffée, pendant une durée **tlong** (étape **920**).

Si l'écart **ΔT** de température **Th** d'huile par rapport à la température **Tliq** du liquide de refroidissement **10** est inférieur ou égal à la valeur seuil **ΔTseuil** (lien **701**), alors au moins une bougie de préchauffage **7** doit être chauffée, pendant une durée **tcourt** (étape **910**) inférieure à la durée **tlong**.

La valeur d'écart seuil **ΔTseuil** peut être prédéfinie et obtenue en effectuant des essais de fonctionnement sur un véhicule prototype muni d'un dispositif de chauffage **3**.

Plusieurs valeurs seuil sont ainsi balayées, permettant de déterminer la valeur seuil **ΔTseuil** pour laquelle un changement de temps de chauffe d'au moins une bougie de préchauffage **7** est nécessaire.

Le temps **tlong** correspond, de préférence, au temps minimal de chauffe permettant un démarrage du moteur, lorsque l'écart de température d'huile par rapport à la température **Tliq** du liquide de refroidissement **10** est strictement supérieur à l'écart seuil **ΔTseuil**.

La durée **tcourt** de chauffe correspond, de préférence, au temps maximal de chauffe permettant un démarrage du moteur lorsque l'écart **ΔT** de température est inférieur ou égal à l'écart seuil **ΔTseuil**.

Avant de procéder à une quelconque commande de chauffe d'au moins une bougie de préchauffage **7**, on peut prévoir de tenir compte lors du démarrage de l'état de charge de la batterie moteur **13**, en vérifiant l'activation de l'indicateur **Soc_b_f** de charge (étape **800**).

Si un déchargement de la batterie **13** est identifié, c'est-à-dire si la charge de la batterie détectée est inférieure à un seuil prédéfini, autrement dit si l'indicateur **Soc_b_f** de charge est tel que **Soc_b_f** = 1 (lien **801**), alors au moins une bougie de préchauffage **7** est activée pendant une durée **tmax** (étape **930**). De cette manière, la compensation de la baisse de vitesse du démarreur **14** peut être compensée par un chauffage optimal de la chambre de combustion **6**, contribuant ainsi à favoriser ainsi le démarrage. Préférentiellement, la durée **tmax** est la durée considérée comme maximale pendant laquelle au moins une bougie de préchauffage **7** est chauffée, c'est à dire jusqu'à l'obtention d'un régime stabilisé, lequel peut se matérialiser par l'arrêt du démarreur **14**.

Si l'indicateur **Soc_b_f** de charge est tel que **Soc_b_f** = 0 (flèche 802), alors la commande de chauffe des bougies de préchauffage **7** est indépendant de la charge de batterie **13**.

La valeur permettant d'activation de l'indicateur **Soc_b_f** de charge faible est ajustable ou calibrable. Elle peut être déterminée en effectuant des essais de fonctionnement sur un véhicule prototype muni d'un dispositif de chauffage **3,** de la batterie **13**, et du démarreur **14**. Plusieurs démarrages sont effectués en balayant différentes valeurs de charge batterie, permettant de définir le seuil d'activation de l'indicateur **Soc_b_f** de charge, pour lequel une chauffe d'au moins une bougie de préchauffage **7** pendant une durée **tmax** prédéterminée est nécessaire.

Le procédé présente de nombreux avantages.

Grâce au procédé, il est possible de démarrer un moteur Diesel **1** lorsque l'activation d'un dispositif de chauffage auxiliaire **3** pendant une durée **δt,** fait passer la température **Tliq** du liquide de refroidissement **10** au dessus de la température **Tliqref** maximale de commande de chauffe d'une bougie de préchauffage **7**, et que la température de la chambre **6** est encore inférieure à la température **Tmin_ch** minimale d'auto-allumage.

Le procédé ne nécessite pas de connaître la température d'huile. Il est donc fait économie d'un capteur ou d'un procédé de cartographie.

Pour le cas où la température d'huile est néanmoins mesurée, la chauffe d'au moins une bougie de préchauffage **3** a lieu pendant le temps nécessaire et suffisant pour l'obtention d'un démarrage, toute chauffe superflue d'une bougie de préchauffage **3** est donc limitée.

Par ailleurs, l'état de charge de la batterie **13** peut être pris en compte par le procédé, de manière à favoriser le démarrage lorsque la batterie **13** présente un état de charge faible. De cette façon, le risque de non démarrage est minimisé.

Enfin, le procédé offre une flexibilité et une facilité lors de sa mise au point. Les différents seuils utilisés par le procédé sont ajustables par des essais ne faisant intervenir qu'un nombre limité de variables.

## Revendications

1. Procédé de commande de la chauffe d'au moins une bougie de préchauffage (**7**) dans un moteur (**1**) muni d'un circuit de refroidissement (**9**) dans lequel circule un liquide de refroidissement (**10**), le circuit de refroidissement (**9**) étant connecté à un dispositif de chauffage auxiliaire (**3**) comportant une chaudière (**19**), la chaudière (**19**) permettant de chauffer le liquide de refroidissement (**10**) du moteur (**1**) par un élément chauffant (**21**), le dispositif de chauffage auxiliaire (**3**) étant destiné à être activé avant le démarrage du moteur (**1**), le procédé de commande de la chauffe de la bougie de préchauffage (**7**) comprenant une étape de réception (**50**) d'une action de mise en contact d'allumage (**S**) correspondant à un ordre de démarrage du moteur (**1**) par l'utilisateur et étant **caractérisé en ce qu'**il comprend les étapes suivantes :
- relevé (**100**) de la durée (**δt**) durant laquelle le dispositif de chauffage auxiliaire (**3**) a été activé ;
- comparaison (**200**) de la durée (**δt**) d'activation du dispositif de chauffage auxiliaire (**3**) à une durée (**δtmax**) prédéterminée de seuil haut ;
- si la durée (**δt**) d'activation du dispositif de chauffage auxiliaire (**3**) est strictement inférieure à la durée (**δtmax**) prédéterminée de seuil haut, alors commande (**900**) de la chauffe de la bougie de préchauffage (**7**).
- si la durée (**δt**) d'activation du dispositif de chauffage auxiliaire (**3**) est supérieure à la durée (**δtmax**) prédéterminée de seuil haut, alors démarrage du moteur (**1000**).

2. Dispositif (**22**) pour la commande de chauffe d'au moins une bougie (**7**) de préchauffage dans un moteur Diesel (**1**) muni d'un circuit de refroidissement (**9**) dans lequel circule un liquide de refroidissement (**10**), un dispositif de chauffage auxiliaire (**3**) comportant une chaudière (**19**) étant connecté au circuit de refroidissement, la chaudière (**19**) permettant de chauffer le liquide de refroidissement (**10**) du moteur (**1**) par un élément chauffant (**21**), le dispositif de chauffage auxiliaire (**3**) étant destiné à être activé avant le démarrage du moteur (**1**), le dispositif mettant en oeuvre le procédé de commande de chauffe de la bougie (**7**) de préchauffage suivant la revendication précédente.

3. Véhicule (**30**), notamment automobile, comprenant un dispositif (**22**) selon la revendication 2.

## Patentansprüche

1. Verfahren zur Steuerung der Erwärmung mindestens einer Glühkerze ( **7** ) in einem Motor (**1**), der mit einem Kühlkreislauf (**9**) versehen ist, in dem eine Kühlflüssigkeit (**10**) zirkuliert, wobei der Kühlkreislauf (**9**) mit einem Hilfsaggregat verbunden ist Heizvorrichtung (**3**), umfassend einen Boiler (**19**), wobei der Boiler (**19**) eine Erwärmung der Kühlflüssigkeit (**10**) ermöglicht des Motors (**1**) durch ein Heizelement (**21**) , wobei die Zusatzheizvorrichtung (**3)** vor dem Starten des **Motors (1)** aktiviert werden soll , wobei das Verfahren zum Steuern der Erwärmung der Vorheizkerze (**7**) einen Schritt umfasst des Empfangens (**50**) einer Aktion des Einschaltens der Zündung (**S**), die einem Befehl zum Starten des Motors (**1**) durch den Benutzer entspricht, und **dadurch gekennzeichnet, dass** es die folgenden Schritte umfasst:
- Ablesen (**100**) der Dauer (**δt** ), während der die Zusatzheizvorrichtung ( **3** ) aktiviert war;
- Vergleich (200**)** der Dauer (**δt**) der Aktivierung der Zusatzheizvorrichtung (**3**) mit einer vorgegebenen Dauer (**δtmax**) eines hohen Schwellenwerts;
- wenn die Dauer (**δt**) der Aktivierung der Zusatzheizvorrichtung (**3**) unbedingt kürzer ist als die vorgegebene Dauer (**δtmax**) des hohen Schwellenwerts, dann Steuerung (**900**) der Erwärmung der Vorheizkerze (**7**).
- wenn die Dauer (**δt**) der Aktivierung der Zusatzheizeinrichtung (**3**) größer ist als die vorgegebene Dauer (**δtmax**) des Hochschwellenwerts, dann Starten des Motors (**1000**).

2. Vorrichtung (**22**) zur Steuerung der Beheizung mindestens einer Vorwärmkerze (**7) in einem Dieselmotor (1**), die mit einem Kühlkreislauf (**9**), in dem eine Kühlflüssigkeit (10) zirkuliert, eine Vorrichtung zur Zusatzheizung (**3**) aufweist ein Boiler (19) ist an den Kühlkreislauf angeschlossen, wobei der Boiler (**19) eine Erwärmung des Kühlmittels (10**) ermöglicht des Motors (**1**) durch ein Heizelement (**21**) , wobei die Hilfsheizvorrichtung (**3**) dazu bestimmt ist, vor dem Starten des Motors ( **1** ) aktiviert zu werden, wobei die Vorrichtung das Verfahren zur Steuerung der Erwärmung des Vorheizens der Kerze (**7**) durchführt nach einem der vorhergehenden Ansprüche.

3. Fahrzeug (**30**), insbesondere Automobil, umfassend eine Vorrichtung (**22**) nach Anspruch 2.

## Claims

1. Method for controlling the heating of at least one glow plug (**7**) in an engine (**1**) provided with a cooling circuit (**9**) in which a cooling liquid (**10**) circulates, the cooling circuit (**9**) being connected to an auxiliary heating device (**3**) comprising a boiler (**19**), the boiler (**19**) enabling the cooling liquid (**10**) to be heated of the engine (**1**) by a heating element (**21**) , the auxiliary heating device (**3**) being intended to be activated before starting the engine (**1**), the method of controlling the heating of the preheating plug (**7**) comprising a step of receiving (**50**) an action of switching on the ignition (**S**) corresponding to an order to start the engine (**1**) by the user and being **characterized in that** it comprises the following steps:
- reading (100 ) of the duration ( **δt**) during which the auxiliary heating device ( **3** ) was activated;
- comparison (**200**) of the duration (**δt**) of activation of the auxiliary heating device (**3**) to a predetermined duration (**δtmax**) of high threshold;
- if the duration (**δt**) of activation of the auxiliary heating device (**3**) is strictly less than the predetermined duration (**δtmax**) of the high threshold, then control (**900**) of the heating of the preheating plug (**7**).
- if the duration (**δt** ) of activation of the auxiliary heating device ( **3** ) is greater than the predetermined duration ( **δtmax**) of the high threshold, then start of the engine (**1000**).

2. Device (**22**) for controlling the heating of at least one preheating plug (**7**) in a Diesel engine **(1**) provided with a cooling circuit (**9**) in which a cooling liquid (**10**) circulates, a device auxiliary heating (**3**) comprising a boiler (**19**) being connected to the cooling circuit, the boiler (**19**) making it possible to heat the coolant (**10**) of the engine (**1**) by a heating element (**21**) , the auxiliary heating device (**3**) being intended to be activated before starting the engine (**1**), the device implementing the method of controlling the heating of the candle (**7**) preheating according to any one of the preceding claims.

3. Vehicle (**30**), in particular automobile, comprising a device (**22**) according to claim 2.
